# EUROPEAN PATENT APPLICATION

(11) **EP 0 972 563 A1**
(43) Date of publication of application: **19.01.2000**
(21) Application number: 98113181.6
(22) Date of filing: 15.07.1998
(51) Int. Cl.: B01J 13/22

(54) **Fabrication of multilayer-coated particles and hollow shells via electrostatic self-assembly of nanocomposite multilayers on decomposable colloidal templates**

(71) Applicant: Max-Planck-Gesellschaft zur Förderung der Wissenschaften e.V., 80539 München (DE)
(72) Inventor: The designation of the inventor has not yet been filed
(74) Representative: Weiss, Wolfgang, Dipl.-Chem. Dr.

(57) **Abstract**

The invention refers to a new process for preparing coated particles and hollow shells by coating colloidal particles with alternating layers of oppositely charged nanoparticles and polyelectrolytes and optionally removing the colloidal cores.

## Description

The invention refers to a new process for preparing coated capsules and hollow shells by coating colloidal particles with alternating layers of oppositely charged nanoparticles and polyelectrolytes.

The area of thin film fabrication, in which ordered, functional supramolecular structures are the chief goal, has been greatly impacted by the recent introduction of the layer-by-layer (LbL) self-assembly technique (Decher, Science 1997, 277, 1232). The LbL method permits the fabrication of multilayer thin film assemblies on solid supports by the spontaneous sequential adsorption of oppositely charged species from dilute aqueous solutions onto charged substrates. The driving force for the multilayer film build-up is primarily due to the electrostatic attraction and complex formation between the charged species deposited. The LbL approach was initially employed to construct multilayer films of polyelectrolytes (Decher, Science 1997, 277, 1232), and subsequently extended to include proteins (Lvov et al, J. Am. Chem. Soc. 1995, 117, 6117; Onda et al, T. Biotech. Bioeng. 1996, 51, 163; Caruso et al, Langmuir 1997, 13, 3427), nucleic acids (Decher et al, J. Biosens. Bioelectron. 1994, 9, 677; Sukhorukov et al, Thin Solid Films 1996, 284/285, 220; Caruso et al, Anal. Chem. 1997, 69, 2043), dyes (Araki et al, Langmuir 1996, 12, 5393; Yoo et al, Synthetic Metals 1997, 85, 1425; Ariga et al, J. Am. Chem. Soc. 1997, 119, 2224), dendrimers (Tsukruk et al, Langmuir 1997, 13, 2171), and various inorganic nanoparticles (Kleinfeld et al, Science 1 994, 265, 370; Keller at al, J. Am. Chem. Soc. 1994, 116, 8817; Kotov et al, J. Am. Chem. Soc. 1997, 119, 6821; Kotov et al, J. Phys. Chem. 1995, 99, 13065; Feldheim et al, J. Am. Chem. Soc. 1996, 118, 7640; Schmitt et al, Adv. Mater 1997, 9, 61; Lvov et al, Langmuir 1997, 13, 6195) in polyelectrolyte multilayer assemblies by replacing one of the polyions by a similarly charged species.

The vast majority of studies concerning the LbL technique have employed macroscopically flat charged surfaces as substrates for multilayer film formation. For example, U.S. 5,716,709 describes multilayered nanostructures comprising alternating organic and inorganic ionic layers on a flat substrate, such as a silicon wafer. Recently, Keller et al reported the preparation of alternating composite multilayers of exfoliated zirconium phosphate sheets and charged redox polymers on (3-aminopropyl)-triethoxysilane-modified silica particles (Keller et al, J. Am. Chem. Soc. 1995, 117, 12879).

In more recent studies (Caruso et al, J. Phys. Chem. B. 1998, 102, 2011; Sukhorukov et al., Colloids Surf. A: Physicochem.Eng.Aspects 1998, 137, 253), the LbL approach was successfully applied to utilise submicron- and micron-sized charged colloidal particles as the adsorbing substrates to produce colloid-supported polyelectrolyte multilayer films: regular step-wise polyelectrolyte multilayer growth was observed on the colloids.

Considerable scientific effort has focussed on the fabrication of composite micro- and nanoparticles that consist of either organic or inorganic cores coated with shells of different chemical composition (Kawahashi and Matijevic, J.Colloid Interface Sci. 1991, 143, 103; Garg and Matijevic, J.Colloid Interface Sci. 1988, 126; Kawahashi and Matijevic, J.Colloid Interface Sci. 1990, 138, 534; Ohmori and Matijevic, J.Colloid Interface Sci. 1992, 150, 594; Giersig et al., Adv. Mater. 1997, 9, 570; Liz-Marzan et al., Langmuir 1996, 12, 4329; Liz-Marzan at al., J.Chem.Soc.Chem.Commun. 1996, 731; Giersig at al., Ber.Bunsenges.Phys.Chem. 1997, 101, 1617; Correa-Duarte et al., Chem.Phys.Lett. 1998, 286, 497; Bamnolker et al., J.Mater.Sci.Lett. 1997, 16, 1412; Margel and Weisel, J.Polym.Sci.Chem.Ed. 1984, 22, 145; Philipse et al., Langmuir 1994, 10, 92). These core-shell particles often exhibit properties which are significantly different to those of the templated core (e.g. different surface chemical composition, increased stability, higher surface area, as well as different magnetic and optical properties), thus making them attractive both from a scientific and technological viewpoint. Applications for such particles are diverse, ranging from capsule agents for drug delivery, catalysis, coatings, composite materials, as well as for protecting senstitive agents such as enzymes and proteins. Previous investigations have demonstrated that polymeric microparticles and inorganic cores can be coated with uniform layers of various materials, including silica, yttrium basic carbonate, zirconium hydrous oxide, either by controlled surface precipitation reactions on the core particles, or by direct surface reactions.

An important extension of core-shell particles is the subsequent removal of the core, resulting in hollow particles or shells. Removal of the templated core has previously been achieved by calcining the coated particles at elevated temperatures or by chemical reactions causing dissolution of the core material. Hollow, submicron sized shells of yttrium compounds have been produced (Kawahashi and Matijevic, 1991, supra) by coating cationic polystyrene latex with yttrium basic carbonate and subsequently calcining. More recently, silica shells were generated by seeded polymerization of tetraethoxysilane on the surface of polystyrene particles, followed by calcination (Bamnolker et al., 1997, supra). Using a similar method, monodisperse, hollow silica nanoparticles have been produced by silica-coating gold nanoparticles, and by chemically dissolving the cores (Giersig et al., Ber.Bunsenges.Phys.Chem., 1997, supra). Hollow particles represent a special class of materials: their lower density and optical properties make them of interest in the fields of medicine, pharmaceutics, materials science and the paint industry.

Conventional methods for the preparation of coated nanoparticles or hollow nanoshells, however, have several disadvantages, since in many cases the formation of uniform and smooth layer structures having sufficient particle coverage as well as control of thickness is very difficult to achieve.

Further, it was suggested (DE 198 12 083.4) that the use of soluble colloidal cores as templates for the sequential deposition of polyelectrolytes can be used to fabricate novel three-dimensional hollow polymer shells.

Herein we report the construction of composite multilayers of nanoparticles and an oppositely charged polyelectrolyte on submicron-sized colloidal particles via the sequential electrostatic adsorption of nanoparticles and polyelectrolyte from dilute solution. Alternating nanoparticle-polyelectrolyte multilayers with various thicknesses have been fabricated. Further, a novel and yet simple method for the fabrication of submicron-sized, hollow, inorganic or composite organic-inorganic particles via colloid templated electrostatic LBL self-assembly of nanoparticle-polymer multilayers, followed by removal of the templated core and optionally the polymer used in the assembly process is presented.

Thus, a first aspect of the present invention is a process for preparing coated particles comprising the steps:
(a) providing template particles and
(b) coating said template particles with a multilayer comprising (i) alternating layers of oppositely charged nanoparticles and polyelectrolytes and/or (ii) alternating layers of oppositely charged nanoparticles.

Preferably, the template particles have an average diameter < 10 µm, more preferably ≤ 5µm, and most preferably ≤ 2µm. The minimum diameter of the template particles is preferably 10 nm, more preferably 100 nm, and most preferably 200 nm.

Suitable template particles may be selected from organic particles, inorganic particles, biological specimens or any combination thereof. Examples of suitable biological specimens are proteins, protein aggregates and cell structures. Templating biological specimens can protect them from certain environments. Further, the template particles may be inorganic particles including inorganic structures. In a preferred embodiment, the template particles are selected from organic polymer latices, such as polystyrene or styrene copolymer latices. On the other hand, also partially cross-linked melamine-formaldehyde template particles can be used which can be disintegrated under mild conditions, e.g. by adjusting the pH value to an acid value of e.g. ≤ 1.5, by dissolving in mild organic solvents such as DMSO or by chemical reactions, e.g. sulfonation with alkali sulfites, alkali hydrogen sulfites etc. Regarding the preparation of partially cross-linked melamine-formaldehyde template particles reference is made to DE 198 12 083.4, particularly Example 1, where it is described that in the polycondensation of melamine-formaldehyde precondensates (cf. DD 224 602) the polycondensation process can be interrupted after some time, e.g. 1 mm to 1 h after start of the reaction, so that dissoluble, partially cross-linked melamine-formaldehyde template particles are obtained.

Other organic template particles, e.g. polystyrene latices, can be disintegrated by dissolving in appropriate organic solvents such as THF or by heating, e.g. to temperatures of 500°C or greater.

The process according to the present invention comprises coating the template particles with alternating coatings of polyelectrolyte molecules and nanoparticles. The polyelectrolytes are usually polymers having ionically dissociable groups which may be a component or substituent of the polymer chain. Preferably, linear or/and water-soluble polyelectrolytes are used. Depending on the type of dissociable group, polyelectrolytes are subdivided into polyacids and polybases. Upon dissociation polyacids separate protons to give polyanions. Examples of polyacids are polyphosphoric acid, polyvinyl or polystyrene sulphuric acid, polyvinyl or polystyrene sulfonic acid, polyvinyl or polystyrene phosphonic acid and polyacrylic acid. Examples of the respective salts, which are also called polysalts, are polyphosphate, polysulphate, polysulfonate, polyphosphonate and polyacrylate. If the polyelectrolyte is a polycation, the nanoparticles preferably have an overall anionic charge.

Polybases contain groups which are capable of accepting protons, e.g. by reacting with acids to give salts. Examples of polybases are polyamines, such as polyethylene amine, polyvinyl amine and polyvinyl pyridine or poly(ammonium salts), such as poly (diallyl dimethylammonium chloride). Polybases form polycations by accepting protons. Preferably, polybases (i.e. polycations) are used as polyelectrolyte. If the polyelectrolyte is a polyanion, the nanoparticles preferably have an overall cationic charge.

The nanoparticles are preferably inorganic materials and may be selected from ceramic particles, e.g. oxidic ceramic particles, such as silicon dioxide, titanium dioxide, zirconium dioxide optionally doped with other metal oxides, magnetic particles such as iron oxide-containing particles, magneto-optical particles, nitridic ceramic particles, e.g. Si₃N₄, carbidic ceramic particles, metallic particles, e.g. gold, silver, palladium and sulfur or selene-containing particles such as cadmium sulfide, cadmium selenide etc. Especially preferred are oxidic ceramic particles such as silicon dioxide. It should be noted, however, that also organic or biological nanoparticles are suitable for performing the present invention, e.g. macromolecules, such as polypeptides, proteins, nucleic acids, etc. Especially preferred biological nanoparticles are proteins, e.g. immunologically reactive proteins such as antigens and antibodies, which may be deposited on the template particle alternating with polyelectrolyte molecules. The resulting particles are suitable for analytical, e.g. immunological, detection methods.

For the preparation of the coated particles according to the present application preferably an aqueous dispersion of template particles of suitable size is provided. The aqueous dispersion may contain a salt, e.g. NaCl in a concentration which preferably ranges from 50 mmole/l to 1 mole/l. Alternating layers of oppositely charged components, i.e. polyelectrolyte molecules and nanoparticles, different types of nanoparticles or combinations thereof are then deposited on said template particles. The pH of the aqueous dispersion is adjusted in such a way that the molecules in each alternating layer, e.g. polyelectrolyte molecules and nanoparticles, each have opposite total charges. The thickness of the coating which is determined by the number of layers is preferably 2 to 100 nm, with 2 to 20 and particularly 3 to 10 coatings being applied. Suitably, each layer may be comprised of a single species of polyelectrolyte or nanoparticle or of a mixture comprising at least two polyelectrolyte or nanoparticle species. Further, for each layer different polyelectrolyte or nanoparticle species may be used.

After application of each layer the excessive molecules (e.g. polyelectrolyte or nanoparticle) which have not contributed to forming the layer are preferably separated off before the next layer is applied. Such separation can be done according to any known method, particularly centrifugation, filtration or/and dialysis.

In a preferred embodiment of the invention the template particles are at first coated with several layers of oppositely charged cationic and anionic polyelectrolytes before the alternating layers of nanoparticles and polyelectrolyte or the alternating nanoparticle layers are applied. The coating of template particles with several layers of oppositely charged polyelectrolytes is described in DE 198 12 083.4 to which express reference is made. Preferably, the template particles are coated with at least two and up to six layers of oppositely charged cationic and anionic polyelectrolytes, e.g. with three layers. The outermost polyelectrolyte layer is preferably oppositely charged with regard to the nanoparticle to be deposited.

The template particles can be of any shape whatsoever, e.g. they can be spherical or rod-shaped. They can have any regular or irregular structure including crystal structures or biological structures such as cells or proteins. Furthermore, the template particles can also be composed of several small sub-particles.

The thickness of the shell walls around the template particles can be readily controlled by varying the number of deposition cycles, whilst the shell size and shape are predetermined by the dimensions of the template particle employed. The thickness of the shell can vary in a wide range, e.g. from 2 to 1000 nm, particularly from 5 to 250 nm.

Preferably, the template particles are at least partially disintegrated after the coating has been completed. They can be dissolved in appropriate solvents or thermally (e.g. by calcination to temperatures of at least 500°C) or - e.g. if partially cross-linked melamine-formaldehyde template particles are used-by mild chemical methods, e.g. in DMSO, or a change in the pH value. After dissolution of the template particles hollow shells remain which are composed of the nanoparticle material and optionally the polyelectrolyte material. The resulting hollow shells may be inorganic or organic shells or composite inorganic-organic or composite inorganic-inorganic shells depending on the method of core removal. For example, when thermal treatment (calcination) is used, all organic matter is removed, hence only inorganic shells are obtained. Exposure to solvent or low-pH solutions to remove the core results in composite hollow particles in which the core is removed but the polyelectrolyte assembled between the nanoparticle layers remains in the shell.

The hollow shells may be characterized by any known methods, e.g. by scanning and transmission electron microscopy and atomic force microscopy. Preferably, the shells are uniform layers of regular thickness and can find applications in numerous areas, such as medicine, pharmaceutics, catalysis, optics, magnetics, separation and sensing methods. In the hollow shells of the present invention active agents, e.g. inorganic or/and organic substances can be encapsulated. Examples of active agents are pharmaceutic agents so that the shells can be used as drug delivery systems in order to transport the active agents to the desired place in the organism. Further, also contrasting agents can be enclosed in the shells, e.g. to improve the quality of images obtained by ultrasonic examination. It is also possible that the hollow shells themselves are used as contrasting agents.

Further possible applications are fillers or pigments in paints, toners in printing or coatings. A still further field of application is the use as high surface area materials for catalysis , e.g. SiO₂ or TiO₂ shells, for solar energy applications, e.g. TiO₂ shells, wherein, if necessary, further active agents may be applied to the inner and/or outer side of the shells. Still another application is the preparation of high-temperature ceramics, e.g. using zirconia nanoparticles or zirconia nanoparticles doped with other metal oxides. Finally, the nanoparticles can also be used for the slow release of chemical substances, including pesticides, herbicides etc., as magnetic shells, e.g. for medical applications, or for separation and sensing procedures.

Of particular importance for the use of shells is the permeability of the shell wall. The permeability of the shell wall can be influenced by the selection of the polyelectrolytes used for the shell, the wall thickness and the ambient conditions. It is thus possible to selectively determine and change the permeability properties.

The permeability properties can be further modified by pores in at least one of the layers. Such pores can be formed by the polyelectrolytes or nanoparticles themselves if suitably chosen. By incorporating selective transport systems such as carriers or channels into the polyelectrolyte shell the transversal transport properties of the shell can be adapted to the respective application. The pores or channels of the shell wall can be selectively opened and closed, respectively, by chemically modifying and/or changing the ambient conditions. A high salt concentration of the medium used for the deposition of the polyelectrolyte results in a low packing density and a high permeability of the shell wall. On the other hand, a high salt concentration of the medium used for the deposition of the nanoparticles (SiO₂) results in a high packing density of the silica particles. Thus, by adjusting the salt concentrations in the deposition medium, the permeability of the shell can be controlled, as desired. Further, the permeability properties of the shell may be modified by selecting the conditions for decomposing the core, e.g. by selecting the temperature and heating conditions in a calcination procedure.

A further aspect of the present invention is a coated particle having a core which is a template particle and a multilayer shell comprising alternating layers of (i) oppositely charged inorganic nanoparticles and polyelectrolytes or (ii) oppositely charged nanoparticles. Preferably, the average diameter of the coated particle is less than 15 µm, more preferably 100 nm to 10 µm.

Still a further aspect of the present invention is a hollow shell obtainable by disintegrating the template particles of the coated particle as described above. The hollow shell may be an inorganic structure or a composite organic-inorganic structure depending on the method used to remove the core.

Preferably, the shell contains an active agent which may be selected from pharmaceuticals, contrast agents, herbicides, pesticides, catalysts and pigments.

The shell may be used as a system for slow and/or targeted release of active substances such as pharmaceuticals, herbicides, pesticides etc. Further, the shell may be used for high surface area applications, e.g. as a carrier for catalysts or photovoltaic materials or as a catalyst itself.

It has been demonstrated that the method of the present invention when applied to produce composite nanoparticle-polymer or nanoparticle-nanoparticle multilayers on colloidal template cores, coupled with removal of the core, provides a successful pathway to fabricate novel hollow shells. Important advantages pertaining to this method are: (i) the thickness of the shell walls can be readily controlled by varying the number of deposition cycles; (ii) the shell size and shape are predetermined by the dimensions of the templating colloid employed; (iii) the method is generally applicable to a wide variety of charged nanoparticles, thereby making possible the production of various inorganic, composite-inorganic (e.g. magnetic nanoparticle and SiO₂ or TiO₂) and composite inorganic-organic shell structures by the simple solution adsorption of charged particles in alteration with polymer; (iv) the method is a suitable alternative of those currently used (e.g. surface precipitation reactions) to produce hollow shells, with the added advantage of eliminating the necessity of more complex preparation procedures; and (v) it can be applied to systems for which the current methods are not suitable.

Further, the invention is illustrated by the following figures and examples:

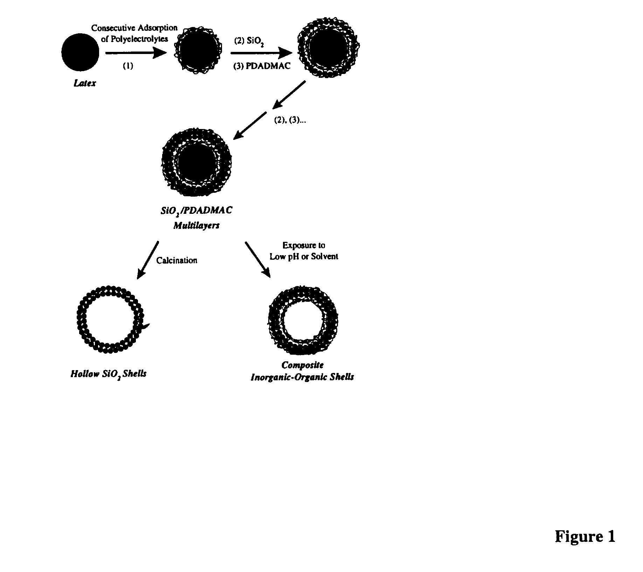

- Fig. 1: is a schematic illustration of the assembly of composite multilayers on colloid latices and the subsequent colloid and polyelectrolyte (optional) removal, resulting in hollow inorganic or composite shells. The first stage involves the sequential adsorption of oppositely charged polyelectrolytes, e.g. poly(diallyldimethylammonium chloride) (PDADMAC)/poly(styrene sulfonate), sodium salt (PSS)/ PDADMAC (step 1) in order to produce a smooth and uniformly positively charged outer surface to facilitate the adsorption of negatively charged SiO₂ nanoparticles. Subsequent alternate adsorption of SiO₂ (step 2) and PDADMAC (step 3) results in SiO₂-PDADMAC multilayers being formed on the latices. The latices may be decomposed by calcination or exposure to low pH or solvent, whereby hollow inorganic or composite inorganic-organic shells are obtained.

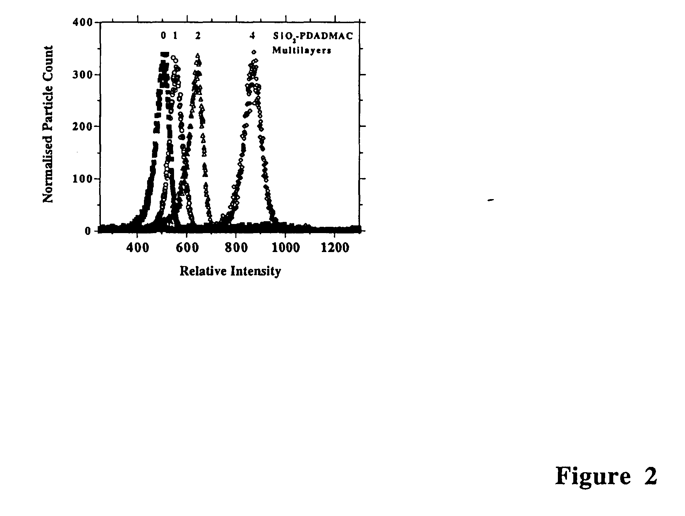

- Fig.2: is a normalized light scattering intensity distribution of Pr₃-coated PS latices (squares) and PS latices coated with Pr₃/(SiO₂/ PDADMAC)_{N} wherein N = 1 (circles), N = 2 (triangles) and N = 4 (diamonds). Multilayer growth is confirmed by the systematic shift in the SPLS intensity distributions.

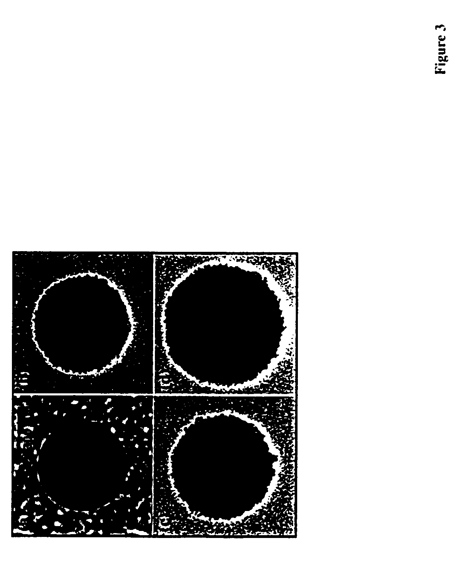

- Fig.3: are transmission electron micrographs (TEM) of uncoated PS latices (a) and PS latices coated with Pr₃/(SiO₂/PDADMAC)_{N} wherein N = 1 (b), N = 2 (c) and N = 4 (d). Regular growth of the SiO₂-PDADMAC multilayers is seen by an increase in diameter of the coated PS latices. The scale bar corresponds to all four TEM images shown.

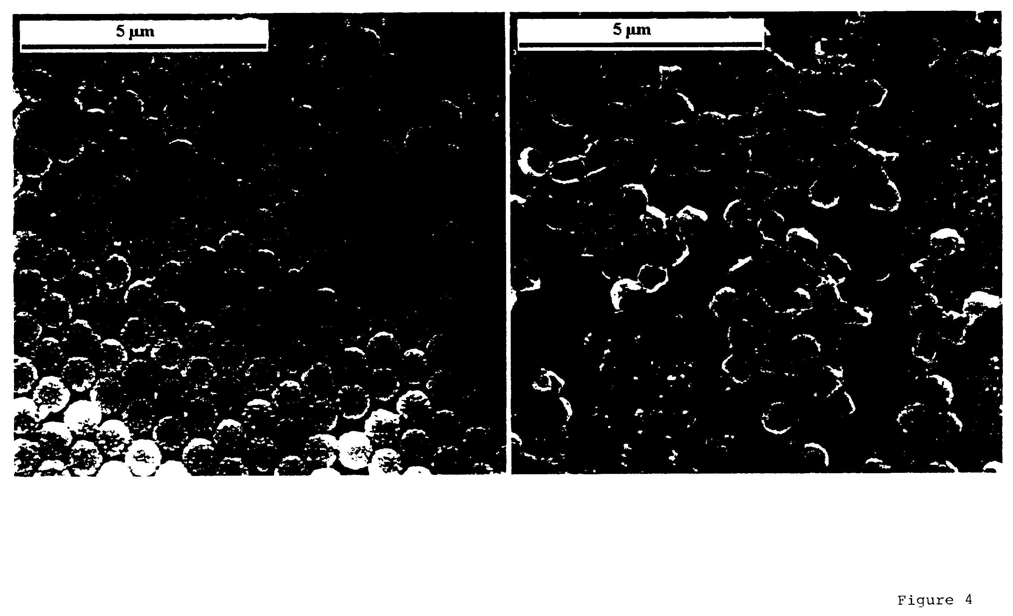

- Fig.4: shows scanning electron micrographs (SEM) of PS latices coated with one SiO₂/PDADMAC multilayer (a) before and (b) after calcination. Uniform and smooth multilayer coatings are apparent in (a). The calcination process results in the PS latex core being removed (b): the thickness of the shell wall with one SiO₂ layer is not always sufficient to maintain the original sphericity of the PS latics (breakage of the hollow shells could also be caused by the vacuum in the SEM). Some intact shells were also observed with one SiO₂ layer.

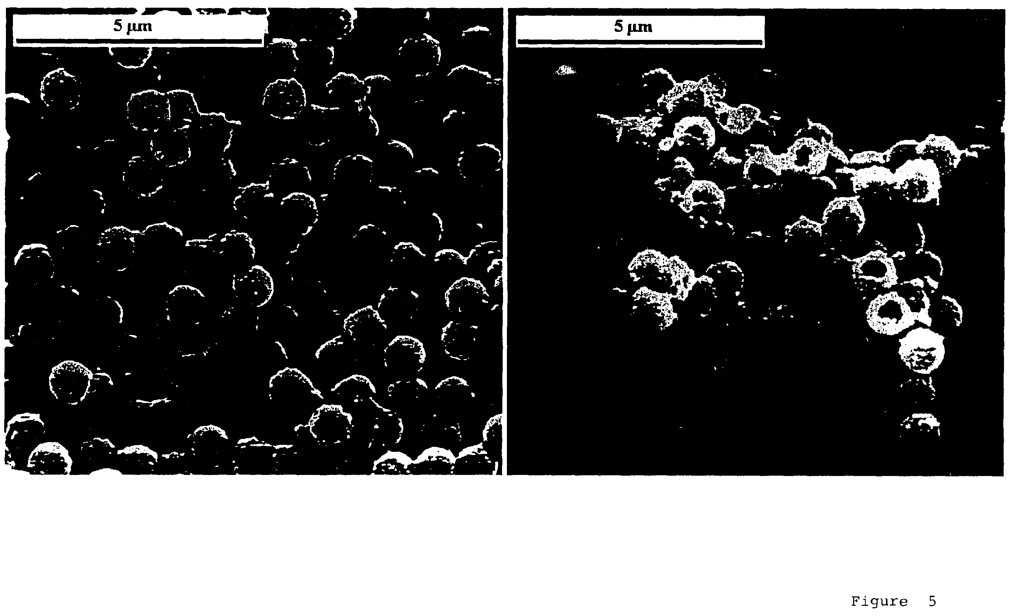

- Fig.5: shows SEM micrographs of PS latices coated with three SiO₂/PDADMAC multilayers (a) before and (b) after calcination. Homogenous coatings are produced on the PS latices (a). Both complete, intact and broken shells are seen in (b): intact spheres are observed for the calcined sample with 3 SiO₂ layers; some of the shells are broken as a result of applying a force to them. The thickness of the silica wall is also significantly increased from that shown in Figure 4 (image a) as a result of successive SiO₂/PDADMAC depositions.

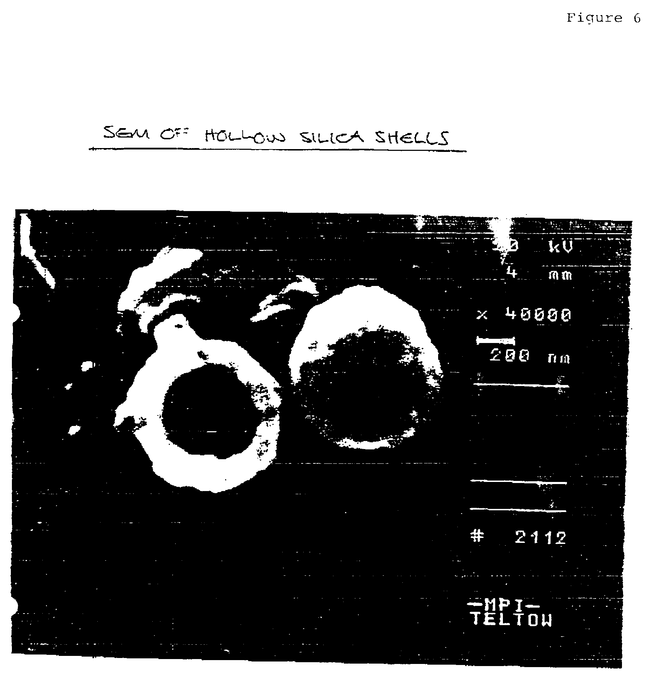

- Fig.6: is a higher magnification of Fig.5b.

### Example

Alternating SiO₂-poly(diallyldimethylammonium chloride) (PDADMAC) multilayers were prepared by first assembling a precursor three-layer PDADMAC and poly(styrene sulfonate) sodium salt (PSS) film (Pr₃) onto negatively charged 640 nm diameter polystyrene (PS) latices and then SiO₂-PDADMAC multilayers on the Pr₃-coated PS latices.

The Pr₃ film (PDADMAC/PSS/PDADMAC) was formed by the alternate adsorption of PDADMAC (Aldrich, M_{w} < 200,000) and PSS (Aldrich, M_{w} 70,000) from aqueous solutions: 0.5 mL of 1 mg mL⁻¹ aqueous polyelectrolyte solution (containing 0.5 M NaCl) was added to the PS latices (10¹⁰ particles in 0.5 mL H₂O), 20 mm allowed for adsorption, and excess polyelectrolyte removed by 4 repeated centrifugation (13500 x g)/wash/redispersion cycles. (SPLS measurements reveal that about 0.5% of the PS particles are lost at each wash/centrifugation/redispersion step). The Pr₃-coated PS latices exhibit a positive surface charge, as determined from electrophoretic mobility (EPM) measurements. Negatively charged sulfate-stabilized PS latices were prepared as described in Furusawa et al, Kolloid-Z. u. Z. Polymere 1972, 250, 908.

SiO₂-PDADMAC multilayers on the PS latices were formed by adding 50 µL of an aqueous 40 wt% SiO₂ suspension (Ludox TM, DuPont) to the Pr₃-coated PS latices dispersed in 0.1 M NaCl (larger amounts of SiO₂ adsorb when the adsorbing solution contains NaCl), allowing 15 mm for SiO₂ adsorption, removing excess SiO₂ by 4 repeated centrifugation (13500 x g)/wash/redispersion cycles, and subsequently depositing PDADMAC (1 mg mL⁻¹/0.5 M NaCl). The isoelectric point of the SiO₂ particles is 3, therefore SiO₂ is negatively charged under the conditions of adsorption (pH 5-6).

Electrophoretic mobility (EPM) measurements using a Malvern Zetasizer 4 show that the surface charge of the multilayer-coated particles alternates from negative to positive with each adsorption of SiO₂ and PDADMAC, respectively. This qualitatively demonstrates that the composite SiO₂-PDADMAC multilayers are formed by the step-wise adsorption of SiO₂ and PDADMAC.

The growth of the SiO₂-PDADMAC multilayers on the PS latices was first followed by the method of single particle light scattering (SPLS) (Lichtenfeld et al, Progr. Colloid Polym. Sci. 1997, 104, 148). Normalised SPLS intensity distributions for the Pr₃-coated PS latices and those coated with 1, 2 and 4 SiO₂-PDADMAC multilayers are shown in Figure 2. Deposition of the SiO₂-PDADMAC multilayers onto the PS latices is manifested as a shift (in the x-axis direction) in the SPLS intensity distributions, confirming multilayer growth. Using the SPLS technique, it is also possible to distinguish between singlets, doublets and triplets (Lichtenfeld et al, Progr. Colloid Polym. Sci. 1997, 104, 148): no aggregation of the multilayer-coated particles is observed, as no intensity peaks are observed at higher intensities.

Using the Raleigh-Debye-Gans theory (Kerker, The Scattering of Light and Other Electromagnetic Radiation: Academic Press: New York, London, 1969) and an estimated refractive index (n) of 1.40 for the adsorbed layer(s), the average thickness calculated for each SiO₂-PDADMAC layer pair for PS/Pr₃/(SiO₂/PDADMAC)_{N} multilayers with N = 1-5 is 30 ± 6 nm. This value closely corresponds to the mean diameter of SiO₂ particles (26 ± 4 nm, determined from TEM), and suggests that on the average approximately a monolayer of SiO₂ is deposited with each SiO₂ adsorption. The layer thickness increases linearly with the number of SiO₂ or SiO₂-PDADMAC layers deposited onto the PS latices.

Direct observation of the multilayer growth process was provided by transmission electron microscopy (TEM) using a Phillips CM12 microscope operating at 120 kV: representative TEM images of uncoated PS latices and Pr₃-modified PS latices coated with SiO₂-PDADMAC multilayers are displayed in Figure 3. The uncoated PS latices feature sharp, smooth edges (a), characteristic of a smooth surface. TEM images obtained for PS latices coated with Pr₃ are essentially identical to those of the uncoated PS latices: the thickness increase (ca. 4 nm, determined from SPLS experiments) is not discernible. The presence of SiO₂-PDADMAC multilayers on the PS latices results in both an increase in surface roughness and an increase in the diameter of the PS latices (b-d). The increase in surface roughness is due to adsorbed SiO₂. It was found that adsorption of PDADMAC onto an outermost layer of SiO₂ reduces the surface roughness of the multilayer. This finding is corroborated by preliminary scanning electron microscopy (SEM) measurements.

The increase in diameter with increasing SiO₂-PDADMAC multilayer number of the coated PS latices (relative to uncoated PS latices, a) is approximately 60 nm (b), 140 nm (c) and 250 nm (d), for 1, 2 and 4 SiO₂-PDADMAC multilayers, respectively. Evaluation of the TEM data for PS/Pr₃/(SiO₂/PDADMAC)_{N} multilayers with N = 1-5 yields an average diameter increment of 65 ± 5 nm, corresponding to a layer thickness of ca. 32 nm, for the SiO₂-PDADMAC layer pair.

To remove the PS latex the solution was initially dried at room temperature and then placed into an oven under N₂ and heated to 500°C at a rate of 5 K/min. After 4h at this temperature the gas was changed to O₂ and the sample remained at 500°C for another 8h. The sample was then cooled to room temperature under O₂. The samples were then examined by SEM using a Zeiss DSM instrument operated at an accelerating voltage of 20 kV.

Figs.4 and 5 compare SiO₂/PDADMAC multilayer coated latex particles having different shell thicknesses before and after core removal. Fig.6 is a magnified picture of a hollow shell. It can be gathered from these results that intact hollow shells may be obtained which have sufficient permeability for the contents of the decomposed core to be expelled.

## Claims

1. A process for preparing coated particles comprising the steps:
(a) providing template particles and
(b) coating said template particles with a multilayer comprising (i) alternating layers of oppositely charged nanoparticles and polyelectrolytes and/or (ii) alternating layers of oppositely charged nanoparticles.

2. The process of claim 1 wherein said template particles have an average diameter < 10 µm.

3. The process of any one of claims 1 or 2 wherein said template particles are selected from organic particles, inorganic particles, biological specimens or any combinations thereof.

4. The process of any of claims 1 to 3 wherein said template particles are selected from organic polymer latices and partially cross-linked melamine-formaldehyde particles.

5. The process of any one of claims 1 to 4 wherein the polyelectrolyte is a linear molecule.

6. The process of any one of claims 1 to 5 wherein the polyelectrolyte is a polycation and the nanoparticle has an overall anionic charge.

7. The process of any of claims 1 to 5 wherein the polyelectrolyte is a polyanion and the nanoparticle has an overall cationic charge.

8. The process of any one of claims 1 to 7 wherein said nanoparticles have an average diameter of from 1 to 100 nm.

9. The process of any one of claims 1 to 8 wherein said nanoparticles are inorganic particles.

10. The process of claim 9 wherein said nanoparticles are selected from ceramic and metal particles.

11. The process of claim 10 wherein said nanoparticles are silicon dioxide particles.

12. The process of any one of claims 1 to 8 wherein said nanoparticles are biomolecules.

13. The process of claim 12 wherein said biomolecules are polypeptides.

14. The process of any one of the preceding claims further comprising the step:
(c) at least partially disintegrating the template particles.

15. The process of claim 14 wherein said disintegration is carried out by thermal treatment, chemical treatment or pH adjustment.

16. Coated particle having a core which is a template particle and a multilayer shell comprising alternating layers of (i) oppositely charged nanoparticles and polyelectrolytes or (ii) oppositely charged nanoparticles.

17. The particle of claim 16 having an average diameter < 15 µm.

18. Hollow shell obtainable by disintegrating the template particle of the coated particle of claim 16 or 17.

19. The hollow shell according to claim 16 which is an inorganic structure.

20. The hollow shell according to claim 16 which is an organic structure.

21. The hollow shell according to claim 16 which is a composite organic-inorganic structure.

22. The hollow shell according to claim 16 which is a composite inorganic-inorganic structure.

23. The shell of any one of claims 18 to 22 containing an active agent.

24. The shell of claim 23 wherein said active agent is selected from pharmaceuticals, contrasting agents, herbicides, pesticides, catalysts, and pigments.

25. Use of the shell according to any one of claims 18 to 24 as a system for slow and/or targeted release of active substances.

26. Use of the shell according to any one of claims 18 to 24 for high surface area applications.
